# EUROPÄISCHE PATENTSCHRIFT

(11) **EP 1 128 974 B1**
(45) Veröffentlichungstag und Bekanntmachung des Hinweises auf die Patenterteilung: **07.09.2005**
(21) Anmeldenummer: 99958005.3
(22) Anmeldetag: 06.11.1999
(51) Int. Cl.: B60K 17/04

(54) **PORTALTRIEB FÜR PORTALACHSEN, INSBESONDERE FÜR ANTRIEBSACHSEN, FÜR EINEN BUS-ANTRIEB**
PORTAL DRIVE FOR PORTAL AXLES, ESPECIALLY FOR DRIVE AXLES, FOR A BUS DRIVE SYSTEM
ENTRAINEMENT PORTIQUE DE PONTS DEPORTES, NOTAMMENT D'ESSIEUX MOTEURS, POUR UN ENTRAINEMENT DE BUS

(30) Priorität: 13.11.1998 DE 19852394
(43) Veröffentlichungstag der Anmeldung: 05.09.2001
(73) Patentinhaber: ZF FRIEDRICHSHAFEN Aktiengesellschaft, 88038 Friedrichshafen (DE)
(72) Erfinder: MAURER, Dieter, D-94032 Passau (DE); BRYSCH, Werner, D-94036 Passau (DE); ALESCH, Klaus, D-94107 Untergriesbach (DE); GRÜNBECK, Wolfgang, D-94209 Regen (DE)
(86) Internationale Anmeldenummer: PCT/EP1999/008529
(87) Internationale Veröffentlichungsnummer: WO 2000/029240

(56) Entgegenhaltungen:
- WO-A-98/01684
- DE-A- 3 027 806
- GB-A- 2 040 015

## Beschreibung

Die Erfindung bezieht sich auf einen Portaltrieb für Portalachsen nach der im Oberbegriff von Anspruch 1 näher definierten Art.

In Portalachsen sind die Achswellen gegenüber den Radachsen um einen bestimmten Abstand der sogenannten Portalhöhe oder -tiefe versetzt. Dieser Achsversatz wird durch jeweils ein Zwischengetriebe unmittelbar am Radantrieb, dem sogenannten Portaltrieb, hervorgerufen. Ein Achsversatz nach oben ermöglicht eine größere Bodenfreiheit eines Fahrzeugs, ein Achsversatz nach unten eine niedrigere Ladefläche oder Flurhöhe. In Nahverkehr- oder Stadt-Omnibussen ist eine möglichst niedrige Flurhöhe wünschenswert, um den Fahrgästen ein bequemes und zügiges Ein- und Aussteigen zu ermöglichen. Die Fahrgäste betreten den Bus vom Bordstein aus, ohne merklich nach oben steigen zu müssen. Dies ist besonders für Rollstuhlfahrer oder Kinderwagen eine deutliche Erleichterung.

In der deutschen Patentschrift 30 27 806 ist eine Portalachse für Nahverkehrs-Omnibusse beschrieben. In dieser Portalachse ist ein Ausgleichsgetriebe außermittig unmittelbar neben einem der beiden Portaltriebe angebracht. Die Achswellen des Ausgleichsgetriebes sind jeweils in ein Antriebsritzel eines Portaltriebes eingesteckt, das frei schwimmend und selbstzentrierend direkt zwischen zwei Zwischenritzeln angebracht und mit diesen im Eingriff ist, so daß alle drei Ritzelachsen in einer Ebene liegen. Die Zwischenritzel greifen wiederum in ein Stirnrad zum Radantrieb ein. Die Zahneingriffskraft und die Antriebsleistung wird auf die beiden Zwischenritzel gleichmäßig verteilt. Das Antriebsritzel, welches das Drehmoment an die Zwischenritzel abgibt, darf funktionsbedingt nur axial gelagert werden, da sonst das Drehmoment nicht gleichmäßig auf die beiden Zwischenritzel verteilt würde. Die axiale Lagerung des Antriebsritzels geschieht über je ein links und rechts des Antriebsritzels angeordnetes Axialrollenlager. Die Einstellung des Antriebsritzels und deren Lagerung erfolgt über nur eine einzige, einseitig verwendete, fein abgestufte Distanzscheibe jeweils an der Portalgehäuse-Außenseite. Da die Einstellscheiben zum Einstellen des Lagerspiels für die axiale Fixierung des Antriebsritzels endlich abgestuft sind, muß die Axiallagerung mit Spiel montiert werden. Durch das Axiallagerspiel kann es beim Betrieb der Portalachse zu Schwingungen und dadurch zu einer Geräuschentwicklung kommen. Zudem hat dieses Axiallagerspiel auch eine Reduzierung der Lagerlebensdauer zur Folge. Je feiner die Abstufung der Einstellscheiben gewählt wird, um so höher sind die Kosten für die Montage und Lagerhaltung der Scheiben.

Der vorliegenden Erfindung liegt die Aufgabe zugrunde, einen Portaltrieb für eine Portalachse zu schaffen, welcher sich dadurch auszeichnet, daß durch eine exakte vorzugsweise vorgespannte Lagereinstellung an dem Antriebsritzel des Portaltriebs unerwünschte Schwingungen und damit Geräusch und eine Reduzierung der Lagerlebensdauer verhindert werden.

Erfindungsgemäß wird diese Aufgabe durch eine auch die im kennzeichnenden Teil von Anspruch 1 genannten Merkmale aufweisenden gattungsgemäße Antriebsachse gelöst.

Erfindungsgemäß wird das Antriebsritzel eines Portaltriebs, bei welchem das Drehmoment des Antriebsritzels über zwei Zwischenräder auf ein Abtriebsritzel übertragen wird, über zwei Axiallager gelagert, bei welchen das axiale Spiel des Axiallagers über Tellerfedern, die jeweils zwischen den Gehäusescheiben des Axiallagers in die jeweiligen Portalgehäuseseite eingelegt werden, aufgehoben wird. Bei der Montage werden Tellerfedern verwendet, welche die fertigungsbedingten Toleranzen ausgleichen und die Axiallageranordnung unter möglichst gleicher Vorspannung hält. Wird der Portaltrieb in einer schrägverzahnten Ausführung verwendet, so wird die Auslegung der Tellerfedern durch die maßlichen Bedingungen und die auftretenden Belastungen durch die aus der Schrägverzahnung resultierenden Axialkräfte bestimmt. Wird die Portalachse in einem Einsatzfall verwendet, bei welchem z. B. durch Bergauf- und Bergabfahrt im Antriebsstrang Zug- und Schubbelastungen auftreten, so sind beidseitig Tellerfedern vorzusehen, um zu gewährleisten, daß in beiden Kraftrichtungen der aus der Schrägverzahnung resultierenden Axialkraft, die Lagerung des Antriebsritzels sich in vorgespanntem Zustand befindet und das Antriebsritzel in beiden axialen Richtungen im Bereich der Bewegungen der Tellerfedern schwimmend gelagert ist. Indem das Antriebsritzel mit nahezu gleicher Vorspannung auf die Axiallager montiert ist, und im Wegbereich der Tellerfedern schwimmend gelagert ist, werden die vorgenannten Schwingungen weitgehend unterbunden und dadurch das Geräuschverhalten im Portaltrieb verbessert. Die Lagerlebensdauer wird durch den vorgespannten Zustand erhöht.

Weitere, für die Erfindung wesentliche Merkmale sind der Figuren-Beschreibung zu entnehmen.

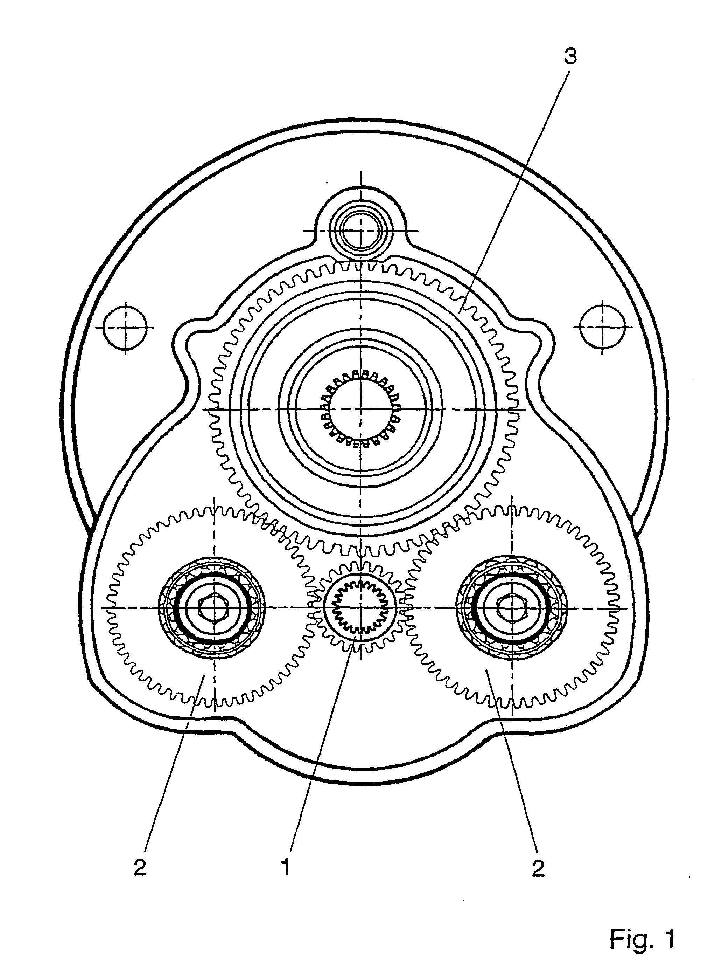

Fig. 1 zeigt einen Portaltrieb, bei welchem das Antriebsritzels 1 mit den zwei Zwischenritzeln 2 kämmt, welche wiederum mit dem Abtriebsritzel 3 in kämmender Verbindung stehen. Das Antriebsritzel 1 ist in radialer Richtung frei gelagert. Dadurch ist es möglich, daß sich das Drehmoment des Antriebsritzels 1 gleichmäßig auf die Zwischenritzel 2 verteilt.

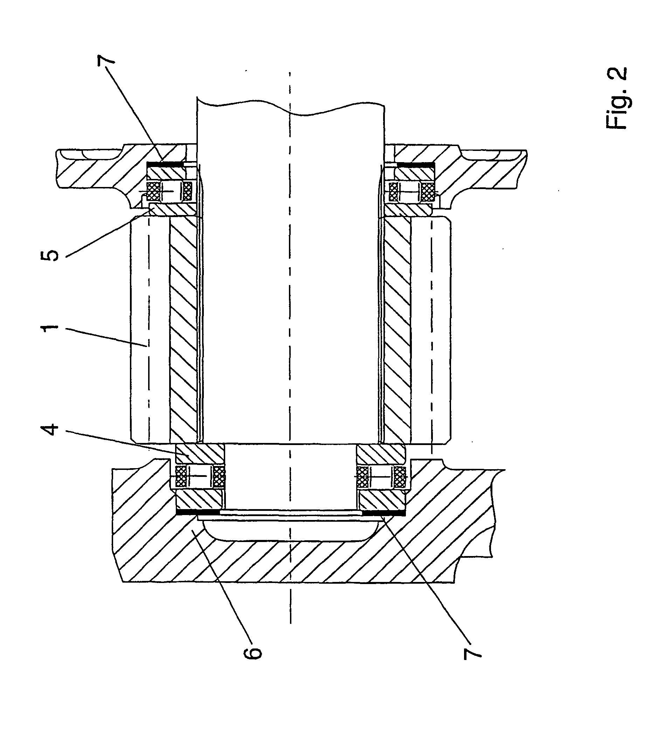

Fig. 2 zeigt einen Ausschnitt eines Portaltriebs, wie in Fig. 1 dargestellt, bei welchem die axiale Lagerung, welche aus den Axiallagern 4 und 5 besteht, das Antriebsritzel 1 axial fixieren. Das Axiallager 4 befindet sich an der zur Portalgehäuse-Außenseite 6 zeigenden Seite. Zwischen dem Portalgehäuse und den Axiallagern 4 und 5 ist jeweils eine Tellerfeder 7 eingebaut, welche in ihrer Auslegung dergestalt ausgeführt ist, daß die Lageranordnung mit den Axiallagern 4 und 5 im montierten Zustand immer unter Vorspannung steht. Eine weitere Möglichkeit welche jedoch nur Verwendung findet wenn die Axialkraft des Antriebsritzels nur in eine Richtung wirkt, die Axiallager 4 und 5 vorzuspannen, besteht darin, zwischen dem Axiallager 4 und dem Portalgehäuse nur eine Tellerfeder 7 vorzusehen. Durch die Verwendung von der Tellerfeder 7 bei bei einem Axiallager 4 ist es möglich, bei einseitig wirkender Axialkraft beide Axiallager in vorgespanntem Zustand zu halten.

### Bezugszeichen

- 1: Antriebsritzel
- 2: Zwischenritzel
- 3: Abtriebsritzel
- 4: Axiallager
- 5: Axiallager
- 6: Gehäuseaußenseite
- 7: Tellerfeder

## Patentansprüche

1. Portaltrieb für eine Portalachse mit einem axial über zwei beidseitig angeordnete Axiallager (4, 5) gelagerten Antriebsritzel (1), welches über Zwischenräder (2), mit welchen es sich in kämmendem Eingriff befindet, ein Abtriebsritzel (3) antreibt, **dadurch gekennzeichnet, daß** die beiden Axiallager(4, 5) jeweils über ein Federelement (7) in axialer Richtung vorgespannt sind, so daß das Antriebsritzel (1) im Bewegungsbereich der Federelemente (7) schwimmend gelagert ist.

2. Portaltrieb für eine Portalachse nach Anspruch 1, **dadurch gekennzeichnet, daß** mindestens ein Federelement (7) verwendet wird, welches in seiner Auslagung dergestalt ausgeführt ist, daß eine definierte Lagervorspannung der Axiallagerung (4, 5) bei allen auftretenden maßlichen Toleranzen und Belastungen erhalten bleibt.

## Claims

1. The invention relates to a portal drive for a portal axle featuring a drive pinion (1), which is axially supported via two bilaterally arranged axial bearings (4, 5), with the drive pinion driving an output pinion (3) via intermediate gears (2), with which it meshes, **characterized in that** each of the two axial bearings (4, 5) is preloaded in axial direction by a spring element (7) so that the drive pinion (1) is floating-mounted within the kinetic range of the spring elements (7).

2. A portal drive for a portal axle according to claim 1, **characterized in that** at least one spring element (7) is used which is designed in such a way that a defined preload of the axial bearing (4, 5) is retained for all dimensional tolerances and loads occurring.

## Revendications

1. Entraînement portique pour un pont portique avec un pignon d'entrée (1) logé sur paliers par l'intermédiaire de deux roulements axiaux (4, 5) disposés des deux côtés, le pignon d'entrée (1) entraînant au moyen de deux pignons intermédiaires (2), avec lesquels il engrène, un pignon de sortie (3), caract érisé en ce que les deux roulements axiaux (4, 5) sont respectivement précontraints dans le sens axial à l'aide d'un élément élastique (7), ainsi que le pignon d'entrée (1) est logé de manière flottante dans la zone de mouvement des éléments élastiques (7).

2. Entraînement portique pour un pont portique selon la revendication 1, **caractérisé en ce que** est utilisé au moins un élément élastique (7), l'épaulement duquel étant réalisé de telle manière qu'une précontrainte des roulements axiaux (4, 5) prédéfinie est maintenue dans toutes les conditions de sollicitation et pour toutes les tolérances dimensionnelles.
